# EUROPEAN PATENT SPECIFICATION

(11) **EP 3 629 855 B1**
(45) Date of publication and mention of the grant of the patent: **11.08.2021**
(21) Application number: 18732490.0
(22) Date of filing: 28.05.2018
(51) Int. Cl.: A47J 31/36, A47J 31/44

(54) **IMAGE ACQUISITION DEVICE AND APPARATUS FOR MAKING A BEVERAGE, COMPRISING SAID IMAGE ACQUISITION DEVICE**
BILDERFASSUNGSVORRICHTUNG UND EINRICHTUNG ZUR HERSTELLUNG EINES GETRÄNKS MIT BESAGTER BILDERFASSUNGSVORRICHTUNG
DISPOSITIF D'ACQUISITION D'IMAGE ET APPAREIL DESTINÉ À LA FABRICATION D'UNE BOISSON, COMPRENANT LEDIT DISPOSITIF D'ACQUISITION D'IMAGE

(30) Priority: 01.06.2017 IT 201700060684
(43) Date of publication of application: 08.04.2020
(73) Proprietor: Caffitaly System S.P.A., 40041 Gaggio Montano (BO) (IT)
(72) Inventor: ACCURSI, Giovanni, 40046 Alto Reno Terme (Bologna) (IT); DIAMANTI, Maurizio, 40030 Castel di Casio (Bologna) (IT)
(74) Representative: Ponchiroli, Simone
(86) International application number: PCT/IB2018/053781
(87) International publication number: WO 2018/220510

(56) References cited:
- WO-A1-2014/056641
- WO-A1-2014/206799
- WO-A1-2015/004551

## Description

This invention relates to the sector of apparatuses for making beverages. In particular, the subject of this invention is an image acquisition device which is usable in an apparatus for making a beverage that uses a capsule containing a food substance. The subject of this invention also is an apparatus for making a beverage, comprising said image acquisition device. At present there are many prior art types of apparatuses capable of making beverages, which, in general, comprise an infusion unit in which an infusion chamber is made, in which, in use, a capsule can be inserted.

The infusion unit in turn comprises a first part and a second part which are movable, at least one relative to the other, between a home position, in which they are at a distance from each other and in which the infusion chamber is open for allowing a capsule to be positioned in it, and an infusion position, in which the two parts are coupled to each other and close the infusion chamber.

There are also beverage making means for, in use, making water (in particular, hot and pressurized water) circulate through the capsule contained in the closed infusion chamber, thereby causing the beverage to be formed, and for delivering the beverage to the outside of the apparatus.

In the sector of apparatuses for making beverages, there are also prior art apparatuses capable of detecting the type of capsule fed to the apparatus and, based on the type of capsule detected, adopting the infusion and delivering parameters (such as temperature and pressure of the water fed to the capsule) best suited to the type of capsule.

One particular technology currently used for that purpose involves an optical recognition of the capsule by means of a reading device which is positioned upstream of the infusion chamber or in the infusion chamber, the reading device being suitable for reading a bar code or a QR-code or another recognisable code present on the capsule. A beverage preparation machine is known from the document WO 2015/004551 A1.

However, the prior art solutions for this technology have several disadvantages.

A first disadvantage is that the optical recognition may result in errors in the reading of the code on the capsule due to poor lighting of the capsule. In fact, it should be taken into account that capsule reading occurs inside the apparatus, where external light does not reach or is insufficient, therefore, the reading devices also comprise lighting elements intended for lighting the capsule during the reading. In many cases those lighting elements produce on the capsule, and in particular on the lid made of shiny plastic material where the code is located, reflections which interfere with the optical reading and may generate errors. Therefore, there is a need to produce capsule lighting that is better than in the prior art solutions.

Another disadvantage is that the optical recognition device is located in a part of the apparatus that is subject to getting dirty and deposits due to coffee powder or other residues, vapours that come up from the infusion chamber after delivering, drops of beverage. Consequently, the reading device can also get dirty and therefore the reading may be interfered with, with consequent errors, by dirt, deposits or misting on the reading device. Therefore, there is a need to reduce as far as possible the dirtying of the reading device and/or to make cleaning it easier.

In this context the technical purpose which forms the basis of this invention is to provide an image acquisition device that overcomes, or at least reduces, those disadvantages or that offers an alternative solution to the prior art solutions.

The technical purpose specified and the aims indicated are substantially achieved by an image acquisition device according to claim 1, and by a beverage-making apparatus according to claim 14. Particular embodiments of this invention are defined in the corresponding dependent claims.

According to one aspect of this invention, the image acquisition device comprises a box-shaped casing which surrounds an inner chamber in which an optical sensor is housed. The optical sensor, which is the component operatively intended for acquiring the images, is facing an image capture zone in which, in use, the capsule to be read is located or passes. The box-shaped casing comprises a front wall that is made of transparent material and is interposed between the optical sensor and the image capture zone. That is useful for physically protecting the optical sensor, which is normally a delicate component, and for preventing dirt and vapours (coming from the infusion chamber) from being deposited on it or from interfering with its correct operation. The front wall, whose outer face could become dirty, may be configured or positioned in such a way that it is easy to clean. For example, the front wall may be positioned so that it is oblique and/or in a back position relative to a channel in which the capsule descends towards the infusion chamber below.

According to another aspect of this invention, at least one lateral wall of the box-shaped casing is coupled to a light emitting element and has a lighting surface region that is outside the inner chamber and is facing the image capture zone. The lateral wall is a light guide designed to transmit, inside it, the light emitted by the light emitting element to said lighting surface region. Therefore, in use, the image capture zone is lit by light projected from the lighting surface region of the light-guide lateral wall.

This is useful for lighting the image capture zone in such a way as to minimise reflections and interference for the optical sensor. In fact, since the lighting for the image capture zone comes from a side and not from the front, the light reflected by the lit capsule is not directed towards the front wall and towards the optical sensor in the inner chamber. Moreover, thanks to the lateral wall with its light-guide function, it is possible to position the light emitting element far from the image capture zone, to prevent it from getting dirty, and to convey the emitted light in a confined way, preventing light dispersion and unwanted lighting towards the optical sensor.

Moreover, the use of the walls of the box-shaped casing as a light-guide is useful for simplifying construction and for reducing the number of parts that make up the image acquisition device. In fact, the box-shaped casing has both the function of protecting and supporting the most delicate components of the image acquisition device, and the function of transmitting the light towards the image capture zone to light the capsule.

Further features and advantages of this invention are more apparent in the detailed description below, with reference to preferred, non-limiting embodiments of an apparatus for making a beverage comprising an image acquisition device. Reference will be made to the accompanying drawings, in which:
- Figure 1 is a sectional perspective view of an embodiment of an apparatus for making a beverage, comprising an image acquisition device according to this invention, the apparatus being in a first condition with the infusion chamber open;
- Figure 2 is a sectional side view of the apparatus of Figure 1, in the first condition;
- Figure 3 is a sectional perspective view of the apparatus of Figure 1 in a second condition, with the infusion chamber closed;
- Figure 4 is a sectional side view of the apparatus of Figure 1, in the second condition;
- Figure 5 is a sectional side view of an enlarged detail of the apparatus of Figure 1, in which the image acquisition device is more visible;
- Figure 6 is a front view of a printed circuit board which is part of the image acquisition device for the apparatus of Figure 1, removed from the apparatus;
- Figure 7 is a perspective view of a first embodiment of a box-shaped casing which is part of the image acquisition device for the apparatus of Figure 1, removed from the apparatus;
- Figure 8 is a top view of the box-shaped casing of Figure 7;
- Figure 9 is a front view of the box-shaped casing of Figure 7;
- Figure 10 is a sectional side view of the box-shaped casing of Figure 7;
- Figure 11 is a perspective view of a second embodiment of a box-shaped casing which is part of the image acquisition device for the apparatus of Figure 1, removed from the apparatus;
- Figure 12 is a top view of the box-shaped casing of Figure 11;
- Figure 13 is a front view of the box-shaped casing of Figure 11;
- Figure 14 is a sectional side view of the box-shaped casing of Figure 11;
- Figure 15 is a perspective view of a third embodiment of a box-shaped casing which is part of the image acquisition device for the apparatus of Figure 1, removed from the apparatus;
- Figure 16 is a top view of the box-shaped casing of Figure 15;
- Figure 17 is a front view of the box-shaped casing of Figure 15;
- Figure 18 is a sectional side view of the box-shaped casing of Figure 15;
- Figure 19 is a perspective view of a part of an apparatus similar to that of Figure 1, in the first condition and with a capsule facing the image acquisition device;
- Figure 20 is a top view of the apparatus of Figure 19, in the first condition and with a capsule facing the image acquisition device;
- Figure 21 is a sectional view of a part of the apparatus of Figure 19, in the first condition and with a capsule facing the image acquisition device.

With reference to the cited figures, the numeral 1 denotes in its entirety an apparatus for making a beverage, made according to this invention. For making a beverage, the apparatus 1 uses a capsule 9, in particular a disposable capsule, which contains a food substance.

In the accompanying drawings the apparatus 1 is schematically illustrated and in particular the details relating to the known aspects which are not relevant for understanding this invention have been omitted.

The apparatus 1 comprises first an infusion unit 2 in which an infusion chamber 21 is made which is suitable for receiving the capsule 9 containing the food substance.

Associated with the infusion chamber 21 there are beverage making means, which are not illustrated in detail in the figures because they can be made according to known methods and are not directly linked to the innovative aspects of this invention. In use, the beverage making means are suitable for making water (in particular hot water) circulate through the capsule 9 contained in the closed infusion chamber 21, thereby causing the beverage to be formed, and for delivering the beverage formed in that way to the outside of the apparatus 1. In the known way, the beverage making means comprise both a feeding circuit 23 for water, which is or is not pressurised, to the infusion chamber 21, and a delivering duct 24 for delivering the beverage to the outside.

If necessary, the beverage making means may also comprise first piercing means 25 for making a first hole in the capsule, through which to feed the water into the capsule 9, and second piercing means 26 for making a second hole through which to allow the beverage to come out of the capsule 9. In any case, since the beverage making means are not part of the innovative aspects of this invention and are in themselves similar to the prior art ones, they will not be described in further detail herein.

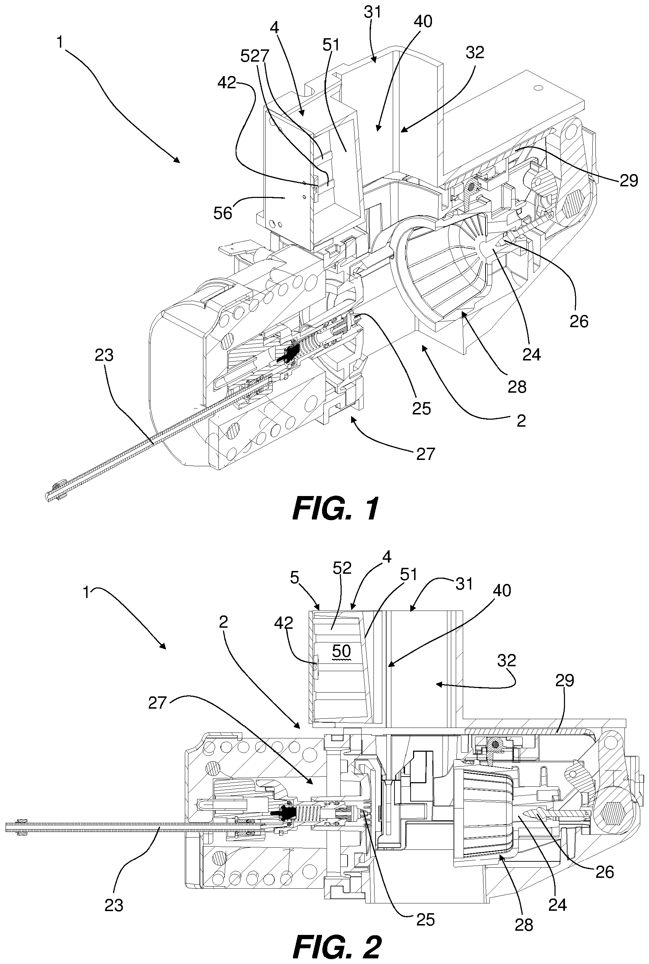

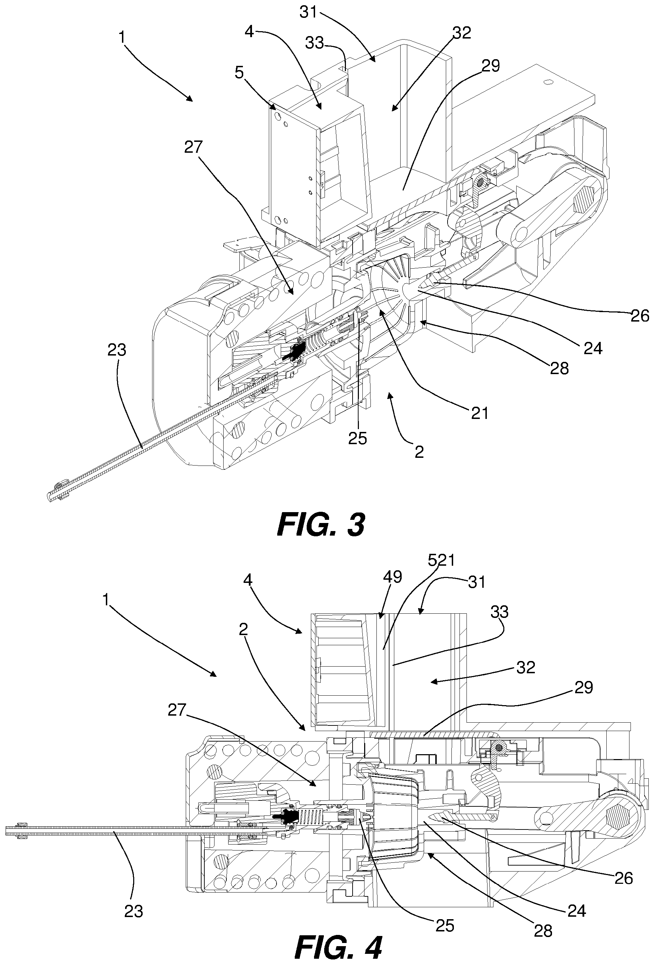

The infusion unit 2 in turn comprises a first part 27 and a second part 28, which are movable, at least one relative to the other, between a home position in which the infusion chamber 21 is open, and an infusion position in which the infusion chamber 21 is closed. When they are in the home position (Figures 1 and 2), the first part 27 and the second part 28 of the infusion unit 2 are at a distance from each other enough to allow a capsule 9 to be inserted in the infusion chamber 21, whilst when they are in the infusion position (Figures 3 and 4), the first part 27 and the second part 28 are coupled together so that in use they clamp the capsule 9 in the infusion chamber 21.

In the embodiment shown in the figures, the infusion unit 2 is of the horizontal type. Therefore, the first part 27 and the second part 28 are movable one relative to the other with a horizontal line of movement, parallel to a central axis defined by the infusion chamber 21. Moreover, the infusion chamber 21 is advantageously made substantially entirely in only one of either the first part 27 or the second part 28 (specifically, in the second part 28), whilst the other part (specifically, the first part 27) acts only as a closing element of the infusion chamber 21.

Specifically, the capsule 9 positioned in the infusion chamber 21 has its central axis substantially horizontal and parallel to or coinciding with the central axis of the infusion chamber 21.

For the positioning of the capsule 9, the apparatus 1 comprises an insertion opening 31 and a transfer channel 32 which connects the insertion opening 31 to the infusion chamber 21. After having been inserted in the apparatus 1 through the insertion opening 31, the capsule 9 travels along the transfer channel 32 until it reaches a receiving seat between the first part 27 and the second part 28 of the infusion unit 2 in the home position.

In particular, the insertion opening 31 is a mouth at the top of the transfer channel 32 and faces upwards. The transfer channel 32 extends substantially from the top down (vertically or, if necessary, obliquely) and the capsule 9 moves in it thanks to the force of gravity. The transfer channel 32 may be equipped with two guiding grooves 33 which are located on opposite sides of the transfer channel 32 and extend parallel to the extent of the transfer channel 32. The guiding grooves 33 are intended for receiving opposite portions of an annular flange projecting at the top of the capsule 9, the lid of the capsule being fixed to the annular flange. Thanks to the interaction with the guiding grooves 33, the capsule 9 falls along the transfer channel 32 without rotating on itself.

When the first part 27 and the second part 28 of the infusion unit 2 are in the home position, the bottom of the transfer channel 32 opens onto the receiving seat which is formed by the space interposed between the first part 27 and the second part 28. When the first part 27 and the second part 28 of the infusion unit 2 are in the infusion position, the bottom of the transfer channel 32 is closed by a movable wall 29 which moves with the second part 28.

To keep the capsule 9 in a standby position in the receiving seat, the apparatus 1 comprises capsule retaining means. Those retaining means, which can be made in the known way (see for example patents EP 1 721 553 B1 and EP 1 757 212 B1), are able to retain the capsule in the standby position both when the first part 27 and the second part 28 are in the home position, and during at least part of their shifting from the home position to the infusion position, usually at least until the capsule is inserted in the infusion chamber 21 enough so that it can no longer fall downwards. The apparatus 1 may also comprise capsule ejecting means that cause the capsule 9 to be ejected from the infusion chamber 21 at the end of beverage delivering, as the first part 27 and the second part 28 return to the home position. The ejecting means may be constituted of the retaining means, or they may be independent of the latter. Whatever the case, they are of the known type and, therefore, are not described in further detail herein. For more details about the known aspects of the apparatus 1, see for example what is described in patent applications WO 2015/019248 A1 and WO 2015/019249 A1 in the name of the same Applicant.

One innovative aspect of this invention relates to an image acquisition device 4, which is usable in the apparatus 1 and is intended, in use, for acquiring at least one image of a portion of the capsule 9. In particular, the image acquisition device 4 is associated with the transfer channel 32 and, in use, acquires at least one image of a portion of the capsule 9 before the latter reaches the infusion chamber 21. In fact, the image acquisition device 4 is positioned along the feeding path of the capsule 9, outside the infusion chamber 21. In the example show in the figures, the device 4 is intended for acquiring an image of the lid of the capsule 9 on which a bar code 90 is printed.

The image acquisition device 4 comprises first at least one optical sensor 42 facing an image capture zone 40 in which, in use, the capsule is located or passes. In particular, the image capture zone 40 is a stretch of the transfer channel 32. The at least one optical sensor 42 is, for example, a CMOS-technology sensor. In particular, the optical sensor 42 operates at least in the visible light spectrum. For example, the optical sensor 42 has an active array made up of 640 x 480 pixels.

The image acquisition device 4 also comprises at least one light emitting element 44 for, in use, lighting the image capture zone 40. The at least one light emitting element 44 is, for example, one or more LEDs.

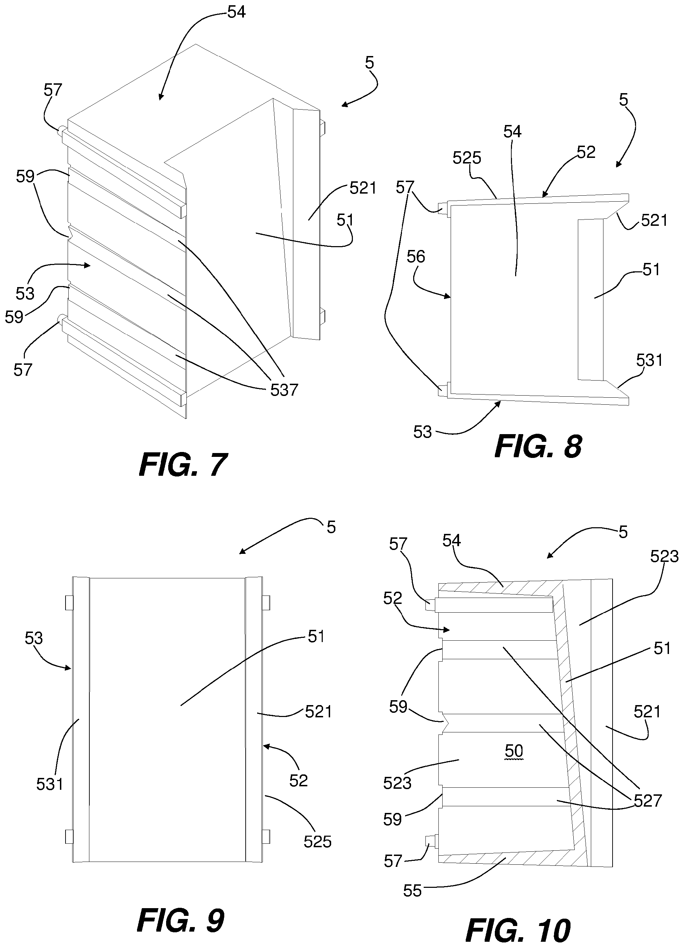

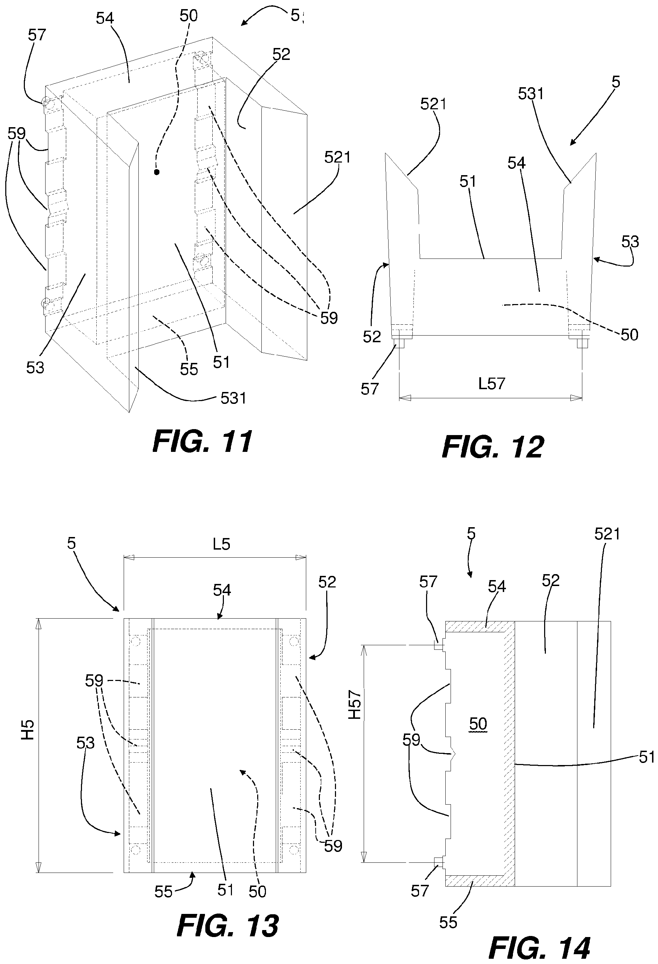

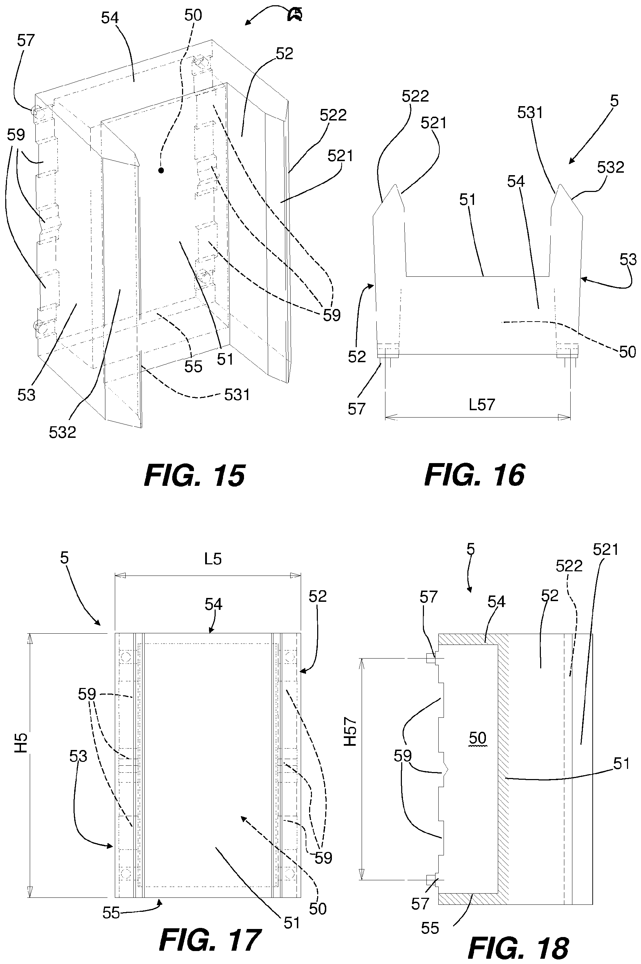

The image acquisition device 4 comprises a box-shaped casing 5, which surrounds an inner chamber 50 in which the optical sensor 42 is housed. A first embodiment of the box-shaped casing 5 is shown in Figures 7 to 10, a second embodiment of the box-shaped casing 5 is shown in Figures 11 to 14, a third embodiment of the box-shaped casing 5 is shown in Figures 15 to 18.

The box-shaped casing 5 comprises a front wall 51, that is made of transparent material and is interposed between the optical sensor 42 and the image capture zone 40, and lateral walls 52, 53, 54, 55 that are connected to the front wall 51 and laterally delimit the inner chamber 50. Specifically, the front wall 51 and the lateral walls 52, 53, 54, 55 are made in one piece. Said walls are solid, that is to say, the material of which they are made extends through their entire thickness. The material used for such walls is, for example, polymethyl methacrylate (PMMA) and in particular said walls form one piece made of polymethyl methacrylate.

The box-shaped casing 5 may also comprise a rear wall 56 which is on the opposite side to the front wall 51 and is therefore further from the image capture zone 40. That rear wall 56 may be a piece separate from the rest of the box-shaped casing 5 and for example is a panel, fixed to the lateral walls, which closes the back of the inner chamber 50. For example, the fixing may be implemented by slotting teeth 57 which project from the lateral walls 52, 53 into respective holes 58 made in the rear wall 56.

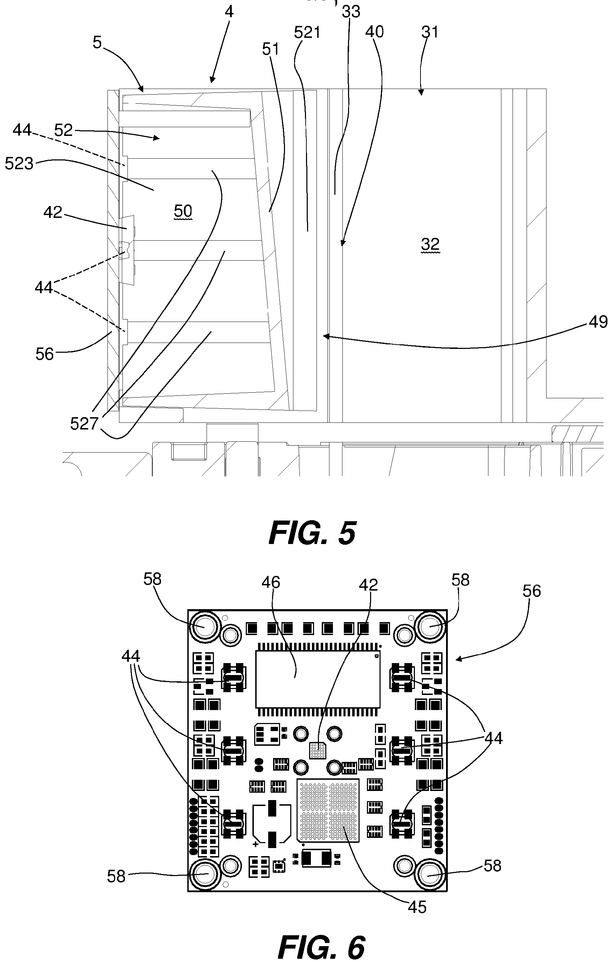

Specifically, as shown in Figure 6, the at least one optical sensor 42 is mounted on the rear wall 56, in a central region of the inner face of the rear wall 56. Even the at least one light emitting element 44 can be mounted on the rear wall 56. In the embodiment illustrated, there are six light emitting elements. Each light emitting element 44 is an LED, in particular suitable for producing white light with a luminous flux of approximately 50 lumen.

The rear wall 56, which is for example a panel removable from the rest of the box-shaped casing 5, can support all of the electronic components of the image acquisition device 4 as well as the optical sensor 42 and the light emitting element 44. In particular, the rear wall 56 is a board incorporating a printed circuit on which the optical sensor 42 and the at least one light emitting element 44 are mounted, as well as further components such as a processor 45 and an SDRAM memory 46.

A rear wall 56 made in this way is advantageous for facilitating mounting, disassembly and maintenance of the image acquisition device 4.

At least one first lateral wall 52 of the box-shaped casing 5, in particular one of the vertical lateral walls, is coupled to the at least one light emitting element 44 and has a lighting surface region 521 that is outside the inner chamber 50 and is facing the image capture zone 40. According to one aspect of this invention, the first lateral wall 52 is a light guide and is designed to transmit, inside it, the light emitted by the light emitting element 44 to said lighting surface region 521. For example, the light emitting element 44 and the lighting surface region 521 are on opposite sides of the first lateral wall 52 and the light travels within the thickness of the first lateral wall 52, remaining confined in the latter, until it reaches the lighting surface region 521 from which it is projected to the outside of the box-shaped casing 5.

Therefore, in use, the image capture zone 40 is lit by light projected from the lighting surface region 521 of the first lateral wall 52, which is a light-guide lateral wall.

Thanks to this, the portion of capsule 9 to be acquired can be lit with light that, coming from a side, is not significantly reflected towards the optical sensor 42. It should be noticed in particular that the lighting surface region 521 is very close to a respective guiding groove 33, that is to say, in use it is close to the periphery of the face of the capsule in the image capture zone 40. Therefore, the lighting is almost grazing lighting for the face of the capsule.

Moreover, the use of a light guide, such as the lateral wall 52, enables control of the path of the light, preventing unwanted lighting of the optical sensor 42, and also may enable more precise and efficient directing of the light onto the capsule, thereby reducing light dispersion.

In the embodiment of Figures 7 to 10, the lateral wall 52 has ribs 527 which are parallel to the path of the light and correspond to variations in the thickness of the lateral wall 52. That may be useful for improving transmission of the light within the lateral wall 52. In particular, each rib 527 is associated with a respective light emitting element 44. Specifically, three light emitting elements 44, in positions spaced apart from one another, are associated with the lateral wall 52.

In order to promote more diffuse lighting which also creates fewer reflections, the lighting surface region 521 may have a translucent or semi-transparent surface finish. Basically, thanks to said surface finish, the surface region 521 lights by diffusion, that is to say, diffusion is used for light output from the light-guide lateral wall 52.

The surface finish is obtained by a suitable processing which converts a transparent surface into a frosted surface. In particular, the surface finish of the lighting surface region 521 is a rough finish obtained by photoengraving. For example, it is a photoengraved surface classed as "NOVATEX 024L".

In alternative embodiments, the surface finish may be constituted of a translucent film applied on the lighting surface region 521. In other alternative embodiments, the surface finish could be obtained by over-moulding the lighting surface region 521 with a suitable material.

The other surfaces of the box-shaped casing 5 preferably have a glossy finish.

During use, the optical sensor 42 sees the lit capsule, through the transparent front wall 51 which is, therefore, a viewing window for the optical sensor 42.

The first lateral wall 52 has a first face 523, facing the inner chamber 50, and a second face 525, opposite to the first face 523 and facing outside of the inner chamber 50.

In the particular embodiment illustrated, the lighting surface region 521 is on an edge face that connects the first face 523 to the second face 525. Specifically, that edge face is oblique relative to the first face 523 and to the second face 525.

In general, the lighting surface region 521 may be oblique relative to an optical path between the optical sensor 42 and the image capture zone 40, so that it is facing a central region of the capsule in the transfer channel 32. Thanks to the surface finish and to the mode of light transmission in the lateral wall 52, the lighting surface region 521 may extent for the entire or almost the entire height of the lateral wall 52, which in turn covers almost the entire length of the transfer channel 32. In particular, the height of the lighting surface region 521 is greater than the diameter of the capsule. Advantageously, the three light emitting elements 44 associated with the lateral wall 52 are positioned spaced and at different heights.

Therefore, the capsule can be lit for a considerable stretch of its path, enabling the optical sensor 42 to obtain good quality images even with a moving capsule.

As shown in the Figures, the first lateral wall 52 has a part which projects from the front wall 51, on the side towards the image capture zone 40. The lighting surface region 521 is on that projecting part of the first lateral wall 52. In other words, the front wall 51 is set back relative to the image capture zone 40 and intersects the first face 523 of the first lateral wall 52. The first lateral wall 52 continues outside the inner chamber 50 towards the transfer channel 32. The lighting surface region 521 is in the part that is outside the inner chamber 50 and facing the image capture zone 40.

In particular, the edge face on which the lighting surface region 521 is located is oblique in such a way that the plane in which it lies intersects the front wall 51. The second face 525 of the first lateral wall 52 projects more towards the transfer channel 32 than the first face 523 of the first lateral wall 52.

In an alternative embodiment, not shown in the figures, the lighting surface region 521 is a region of first face 523 that is outside the inner chamber 50 and is located on the projecting part of the first lateral wall 52. In this alternative embodiment, the lighting surface region 521 could be not oblique relative to the optical path between the optical sensor 42 and the image capture zone 40.

To promote a more efficient transfer of the light to the first lateral wall 52 and to reduce light dispersion, the first lateral wall 52 may have a seat 59 for receiving the at least one light emitting element 44 coupled to the first lateral wall 52, the seat 59 being made within the thickness of the first lateral wall 52.

As shown in the figures, the first lateral wall 52 extends from a first side to a second side along a line of extension that is substantially parallel to an optical path between the optical sensor 42 and the image capture zone 40. The first side is on the side of the image capture zone 40 and of the transfer channel 32, whilst the second side is on the opposite side, that is to say, on the side of the rear wall 56. The lighting surface region 521 is at the first side, whilst the at least one light emitting element 44 is positioned at the second side. For example, the seat 59 for the light emitting element 44 is made in the second side.

In the embodiment illustrated, as already indicated, the first lateral wall 52 is coupled to three light emitting elements 44 and is equipped with corresponding seats 59 for them. In alternative embodiments, the first lateral wall 52 may be coupled to two or more light emitting elements 44.

In the embodiments illustrated, a second lateral wall 53 (which in particular is on the opposite side to the first lateral wall 52 and is the other vertical lateral wall) is also a light-guide lateral wall and is coupled to at least one respective light emitting element 44. The second lateral surface 53 has a respective lighting surface region 531 which is outside the inner chamber 50 and facing the image capture zone 40. Therefore, the first lateral wall 52 of the box-shaped casing 5 is a first light-guide lateral wall associated with at least one first light emitting element 44 and the second lateral wall 53 of the box-shaped casing 5 is a second light-guide lateral wall associated with at least one second light emitting element 44.

In use, the image capture zone 40 is lit from two opposite sides by light projected from the lighting surface regions 521, 531 of the light-guide lateral walls 52, 53.

What is described above relative to the first lateral wall 52 is also similarly applicable to the second lateral wall 53. In particular, the two light-guide lateral walls 52, 53 are the same as each other and are specular relative to a vertical centre plane of the box-shaped casing 5. In the embodiment of Figures 7 to 10, the second lateral wall 53 has respective ribs 537. Specifically, the six light emitting elements 44 are divided between the two light-guide lateral walls 52, 53, each light-guide lateral wall being associated with three light emitting elements.

In order to prevent interference and internal reflections which could interfere with correct operation of the optical sensor 42, for each of the lateral walls 52, 53, 54, 55 the face facing the inner chamber 50 may be black coloured or dark coloured. That can be done, for example, by painting the inner faces with black or dark paint, or by applying a black or dark film, or with suitable surface treatments.

Moreover, to prevent water vapour or dirt from being able to penetrate the inner chamber 50, the inner chamber 50 is substantially hermetically sealed relative to the region outside the box-shaped casing 5. For example, as already mentioned above, the front wall 51 and the lateral walls 52, 53, 54, 55 are made in one piece and the rear wall 56 is a panel fixed on the lateral walls 52, 53, 54, 55 in a substantially airtight way.

The front wall 51, that is to say, the viewing window, is preferably oblique relative to a vertical plane: as shown in the figures, its outer face is partly facing upwards, that is to say, the top of it is further from the transfer channel 32 than the bottom of it. This is useful for promoting downward sliding of dirt and drops which may fall onto the outer face of the viewing window and at the same time for making it easy for a user to clean, since the user can gain access to the outer face through the insertion opening 31.

With reference to the second embodiment of the box-shaped casing 5, Figures 11 to 14 show its hidden edges in a transparent view.

The second embodiment differs from the first embodiment substantially in that the lateral walls 52, 53 have no respective ribs 527, 537 and have a greater thickness than in the first embodiment. The latter aspect is useful in particular for collecting a greater quantity of light from the respective light emitting elements 44. Again in the second embodiment, there are seats 59, hollowed out of the lateral walls 52, 53, for receiving the light emitting elements 44.

Moreover, in the second embodiment, the front wall 51 of the box-shaped casing 5 is set further back towards the rear wall 56. Consequently, the inner chamber 50 is less deep and its lateral walls 52, 53 project from the front wall 51 for a significant stretch towards the transfer channel 32. Moreover, unlike in the first embodiment, the front wall 51 is not significantly oblique relative to a vertical plane.

Again in the second embodiment, the lighting surface regions 521, 531 have a surface finish that is translucent or semi-transparent, thanks to which the lighting of the image capture zone 40 occurs by diffusion.

For example, the box-shaped casing 5 has a height H5 of 50 mm and a width L5 of 35.7 mm. The viewing window facing the image capture zone 40 has a height of 44 mm and a width of 23 mm. The vertical distance H57 between the projecting teeth 57 is 41 mm and the horizontal distance L57 between them is 31 mm. The lighting surface regions 521, 531 are oblique, for example set at 45°, relative to an optical path between the optical sensor 42 and the image capture zone 40, in particular relative to a vertical centre plane of the box-shaped casing 5.

With reference to the third embodiment of the box-shaped casing 5, Figures 15 to 18 show its hidden edges in a transparent view.

The box-shaped casing 5 according to the third embodiment differs from the other two embodiments mainly due to the fact that it operates by reflection. Each light-guide lateral wall 52, 53 comprises, in the part projecting towards the image capture zone 40, the lighting surface region 521, 531 and an oblique face 522, 532 which forms an angle with the lighting surface region 521, 531. In the example shown in the figures, the face with the lighting surface region 521, 531 and the oblique face 522, 532 form an edge. Basically, the light emitted by the respective light emitting elements 44 travels within the material of the lateral wall 52, 53 and is reflected (within the lateral wall 52, 53) by the oblique face 522, 532, which extends in such a way as to intercept substantially all of the arriving light. Depending on the material used for the box-shaped casing 5, the inclination of the oblique face 522, 532 is selected in such a way that substantially all of the incident light is reflected and only a negligible part of the incident light is transmitted to the outside through the oblique face 522, 523.

The light reflected by the oblique face 522, 532 is directed towards the lighting surface region 521, 531, from which it comes out towards the image capture zone to be lit.

The angle between the oblique face 522, 532 and the face with the lighting surface region 521, 531, like the orientation of the faces and their dimensions, may be selected and optimised based on the desired lighting evenness.

In this embodiment, the lighting surface regions 521, 531 may have a glossy finish instead of a finish of translucent or semi-transparent type.

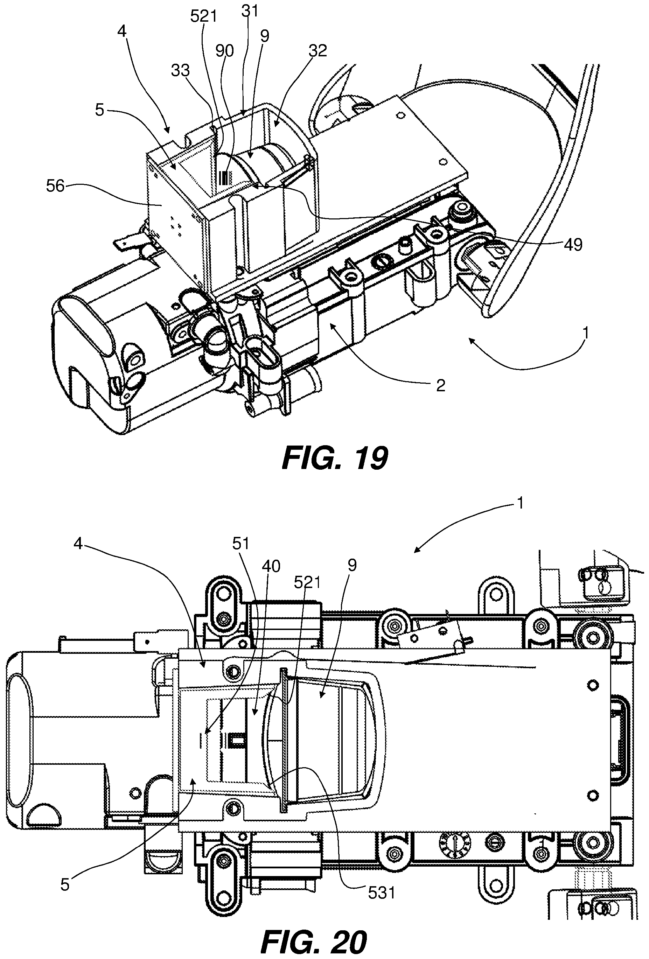

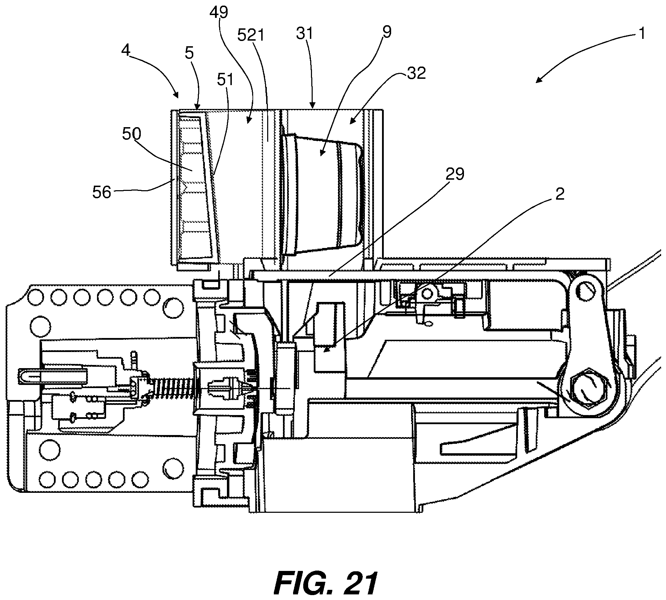

Returning to the apparatus 1 as a whole, in the embodiments illustrated in Figures 1 to 5 and 19 to 21, the image acquisition device 4 is positioned in a lateral seat 49 relative to the transfer channel 32. The front wall 51 of the image acquisition device 4 is at a distance from the transfer channel 32 and is located in a position set back in the lateral seat 49. That is particularly evident for a box-shaped casing 5 according to the second embodiment and the third embodiment mentioned above (see Figures 19 to 21).

Thanks to this feature, any water vapour that rises in the transfer channel 32 from the infusion chamber 21 passes far from the front wall 51, without making contact with it and thereby preventing the front wall from misting over or getting dirty with residues carried by the vapour.

The apparatus 1 comprises an electronic processing unit, suitable for managing the image acquisition device 4 and for processing the images obtained by the optical sensor 42. If necessary, that electronic processing unit could be part of the image acquisition device 4, for example it could be the processor 45 mounted on the rear wall 56 of the box-shaped casing 5. Alternatively, the processing may be done partly by the processor 45 on the rear wall 56 and partly by another electronic processing unit.

In one mode for using the subject of this invention, the image acquisition device 4 is used for acquiring one or more images of the capsule 9 when the capsule is at the image capture zone 40, as shown in Figures 19 to 21. In particular, the image acquisition device 4 is used for acquiring one or more images of at least one identification portion 90 of the capsule 9, that is to say, a portion on which there is a graphical element which is in itself visible and recognisable. That graphical element is, for example, a word or figurative mark, preferably registered, intended for indicating to the consumer that the capsule in question is compatible with the apparatus 1 and is approved by the manufacturer of the apparatus 1.

Further details about the structure and operation of an example of an apparatus which may be equipped with an image acquisition device 4 according to this invention are obtainable from Italian patent application No. 102016000010585 and international patent application No. PCT/IB2017/050411, by this Applicant.

Finally, it should be noticed that this invention is relatively easy to produce and that even the cost linked to implementing the invention is not very high. The invention described above may be modified and adapted in several ways without thereby departing from the scope of the appended claims.

All details may be substituted with other technically equivalent elements and the materials used, as well as the shapes and dimensions of the various components, may vary according to requirements, even without departing from the scope of the appended claims.

## Claims

1. An image acquisition device (4) usable in an apparatus (1) for making a beverage that uses a capsule containing a food substance,
the image acquisition device (4) being intended in use for acquiring at least one image of a portion of the capsule,
the image acquisition device (4) comprising:
- an optical sensor (42) facing an image capture zone (40) in which, in use, said capsule is located or passes;
- at least one light emitting element (44) for, in use, lighting the image capture zone (40);
- a box-shaped casing (5) surrounding an inner chamber (50) in which the optical sensor (42) is housed, the box-shaped casing (5) comprising a front wall (51), that is made of transparent material and is interposed between the optical sensor (42) and the image capture zone (40), and lateral walls (52, 53, 54, 55) that are connected to the front wall (51) and laterally delimit the inner chamber (50);
wherein at least one lateral wall (52) of the box-shaped casing (5) is coupled to the at least one light emitting element (44) and has a lighting surface region (521) that is outside the inner chamber (5) and is facing the image capture zone (40), said at least one lateral wall (52) being a light guide designed to transmit, inside it, the light emitted by the light emitting element (44) to said lighting surface region (521),
whereby, in use, the image capture zone (40) is lit by light projected from the lighting surface region (521) of the light-guide lateral wall (52).

2. The image acquisition device (4) according to claim 1, wherein the light-guide lateral wall (52) has a first face (523) facing the inner chamber (50) and a second face (525) opposite to the first face (523) and facing outside of the inner chamber (50), said lighting surface region (521) being on an edge face that connects the first face (523) to the second face (525).

3. The image acquisition device (4) according to claim 2, wherein the edge face is oblique relative to the first face (523) and to the second face (525).

4. The image acquisition device (4) according to any of claims 1 to 3, wherein the light-guide lateral wall (52) has a part that projects from the front wall (51) on the side towards the image capture zone (40), said lighting surface region (521) being on the projecting part of the light-guide lateral wall (52).

5. The image acquisition device (4) according to claim 4, wherein the light-guide lateral wall (52) has a first face (523) facing the inner chamber (50) and a second face (525) opposite to the first face (523) and facing outside of the inner chamber (50),
said lighting surface region (521) being a region of the first face (523) that is outside the inner chamber (50) and is located on said projecting part of the light-guide lateral wall (52).

6. The image acquisition device (4) according to claim 4 or 5, wherein the projecting part of the light-guide lateral wall (52) also comprises an oblique face (522) that forms an angle with the lighting surface region (521), wherein in use the light emitted by the at least one light emitting element (44) is reflected inside the light-guide lateral wall (52) by the oblique face (522) and is directed towards the lighting surface region (521).

7. The image acquisition device (4) according to any of claims 1 to 6, wherein the light-guide lateral wall (52) has a seat for receiving said at least one light emitting element (44), the seat being made in the thickness of the light-guide lateral wall (52).

8. The image acquisition device (4) according to any of claims 1 to 7, wherein the light-guide lateral wall (52) extends from a first side to a second side along a line of extension that is substantially parallel to an optical path between the optical sensor (42) and the image capture zone (40), said lighting surface region (521) being at the first side and the at least one light emitting element (44) being positioned at the second side.

9. The image acquisition device (4) according to any of claims 1 to 8, wherein said lighting surface region (521) has a translucent or semi-transparent surface finish.

10. The image acquisition device (4) according to any of claims 1 to 9, wherein the box-shaped casing (5) comprises a rear wall (56) that is on the side opposite to the front wall (51), the optical sensor (42) and the at least one light emitting element (44) being mounted on the rear wall (56).

11. The image acquisition device (4) according to any of claims 1 to 10, wherein a first lateral wall (52) of the box-shaped casing (5) is a first light-guide lateral wall coupled to at least one first light emitting element (44) and wherein a second lateral wall (53) of the box-shaped casing (5), on the side opposite to the first lateral wall (52), is a second light-guide lateral wall coupled to at least one second light emitting element (44),
whereby, in use, the image capture zone (40) is lit from two opposite sides by light projected from the lighting surface regions (521, 531) of the light-guide lateral walls (52, 53).

12. The image acquisition device (4) according to any of claims 1 to 11, wherein the inner chamber (50) is substantially airtight relative to the region outside the box-shaped casing (5).

13. The image acquisition device (4) according to any of claims 1 to 12, wherein the lateral walls (52, 53, 54, 55) of the box-shaped casing (5) each have a face facing the inner chamber, said face being black coloured or dark coloured.

14. An apparatus (1) for making a beverage, comprising:
- an infusion chamber (21) designed to receive a capsule containing a food substance for making a beverage;
- an insertion opening (31) for inserting the capsule into the apparatus (1);
- a capsule transfer channel (32), that connects the insertion opening (31) to the infusion chamber (21);
- an image acquisition device (4) according to any of claims 1 to 13; wherein the image capture zone (40), that the optical sensor (42) is facing, is a stretch of the capsule transfer channel (32).

15. The apparatus (1) according to claim 14, wherein the transfer channel (32) extends substantially from the top down and the image acquisition device (4) is positioned in a lateral seat (49) relative to the transfer channel (32),
the front wall (51) of the box-shaped casing (5) of the image acquisition device (4) being at a distance from the transfer channel (32) in a position set back in the lateral seat (49), so that any water vapour that during use rises in the transfer channel (32) from the infusion chamber (21) does not strike the front wall (51).

## Patentansprüche

1. Eine Bilderfassungsvorrichtung (4), verwendbar in einem Apparat (1) zur Zubereitung eines Getränks, der eine Kapsel benutzt, welche eine Lebensmittelsubstanz enthält,
die Bilderfassungsvorrichtung (4) ist dabei im Gebrauch dazu gedacht, mindestens ein Bild eines Abschnitts der Kapsel zu erfassen,
die Bilderfassungsvorrichtung (4) beinhaltet dabei:
- einen optischen Sensor (42), der auf einen Bilderfassungsbereich (40) gerichtet ist, in dem sich besagte Kapsel im Gebrauch befindet oder den sie durchläuft;
- mindestens ein Licht emittierendes Element (44), um im Gebrauch den Bilderfassungsbereich (40) zu beleuchten;
- ein kastenförmiges Gehäuse (5), das eine Innenkammer (50) umgibt, in der der optische Sensor (42) untergebracht ist, das kastenförmige Gehäuse (5) beinhaltet dabei eine vordere Wand (51), die aus durchsichtigem Material hergestellt ist und zwischen dem optischen Sensor (42) und dem Bilderfassungsbereich (40) angebracht ist, und seitliche Wände (52, 53, 54, 55), die mit der vorderen Wand (51) verbunden sind und die Innenkammer (50) seitlich begrenzen;
wobei mindestens eine seitliche Wand (52) des kastenförmigen Gehäuses (5) mit dem mindestens einen Licht emittierenden Element (5) verbunden ist und eine Beleuchtungsflächenzone (521) hat, die sich außerhalb der Innenkammer (5) befindet und zum Bilderfassungsbereich (40) gerichtet ist, besagte mindestens eine seitliche Wand (52) ist dabei ein Lichtleiter, der dazu dient, das Licht, das vom Licht emittierenden Element (44) emittiert wird, in sich selbst zu besagter Beleuchtungsflächenzone (521) zu übertragen,
wobei der Bilderfassungsbereich (40) im Gebrauch durch Licht beleuchtet wird, das von der Beleuchtungsflächenzone (521) der seitlichen Lichtleiterwand (52) projiziert wird.

2. Die Bilderfassungsvorrichtung (4) nach dem Patentanspruch 1, wobei die seitliche Lichtleiterwand (52) eine erste Seite (523) hat, die zur Innenkammer (50) gerichtet ist, und eine zweite Seite (525), die der ersten Seite (523) gegenüberliegt und aus der Innenkammer (50) heraus gerichtet ist, besagte Beleuchtungsflächenzone (521) ist dabei auf einer Kantenseite, die die erste Seite (523) mit der zweiten Seite (525) verbindet.

3. Die Bilderfassungsvorrichtung (4) nach dem Patentanspruch 2, wobei die Kantenseite in Bezug auf die erste Seite (523) und die zweite Seite (525) schräg ist.

4. Die Bilderfassungsvorrichtung (4) nach jedem der Patentansprüche 1 bis 3, wobei die seitliche Lichtleiterwand (52) einen Teil hat, der von der vorderen Wand (51) an der Seite in Richtung des Bilderfassungsbereichs (40) hervorragt, besagte Beleuchtungsflächenzone (521) befindet sich dabei auf dem hervorragenden Teil der seitlichen Lichtleiterwand (52).

5. Die Bilderfassungsvorrichtung (4) nach dem Patentanspruch 4, wobei die seitliche Lichtleiterwand (52) eine erste Seite (523) hat, die zur Innenkammer (50) gerichtet ist, und eine zweite Seite (525), die der ersten Seite (523) gegenüberliegt und aus der Innenkammer (50) heraus gerichtet ist,
besagte Beleuchtungsflächenzone (521) ist dabei eine Zone der ersten Seite (523), die außerhalb der Innenkammer (50) ist und sich auf besagtem hervorragenden Teil der seitlichen Lichtleiterwand (52) befindet.

6. Die Bilderfassungsvorrichtung (4) nach den Patentansprüchen 4 oder 5, wobei der hervorragende Teil der seitlichen Lichtleiterwand (52) auch eine schräge Seite (522) beinhaltet, die einen Winkel mit der Beleuchtungsflächenzone (521) bildet, wobei im Gebrauch das Licht, das von dem mindestens einen Licht emittierenden Element (44) emittiert wird, innerhalb der seitlichen Lichtleiterwand (52) von der schrägen Seite (522) reflektiert wird und zu der Beleuchtungsflächenzone (521) geleitet wird.

7. Die Bilderfassungsvorrichtung (4) nach jedem der Patentansprüche 1 bis 6, wobei die seitliche Lichtleiterwand (52) einen Sitz hat, um das besagte mindestens eine Licht emittierende Element (44) aufzunehmen, der Sitz ist dabei in der Dicke der seitlichen Lichtleiterwand (52) gebildet.

8. Die Bilderfassungsvorrichtung (4) nach jedem der Patentansprüche 1 bis 7, wobei sich die seitliche Lichtleiterwand (52) von einer ersten Seite zu einer zweiten Seite auf einer Ausdehnungslinie erstreckt, die im Wesentlichen parallel zu einem optischen Weg zwischen dem optischen Sensor (42) und dem Bilderfassungsbereich (40) ist, besagte Beleuchtungsflächenzone (521) ist dabei an der ersten Seite und das mindestens eine Licht emittierende Element (44) befindet sich dabei an der zweiten Seite.

9. Die Bilderfassungsvorrichtung (4) nach jedem der Patentansprüche 1 bis 8, wobei besagte Beleuchtungsflächenzone (521) eine transluzente oder halb transparente Oberflächenverarbeitung hat.

10. Die Bilderfassungsvorrichtung (4) nach jedem der Patentansprüche 1 bis 9, wobei das kastenförmige Gehäuse (5) eine Rückwand (56) beinhaltet, die auf der Seite gegenüber der vorderen Wand (51) ist, der optische Sensor (42) und das mindestens eine Licht emittierende Element (44) sind dabei an der Rückwand (56) montiert.

11. Die Bilderfassungsvorrichtung (4) nach jedem der Patentansprüche 1 bis 10, wobei eine erste Seitenwand (52) des kastenförmigen Gehäuses (5) eine erste seitliche Lichtleiterwand ist, die mit mindestens einem ersten Licht emittierenden Element (44) verbunden ist und wobei eine zweite Seitenwand (53) des kastenförmigen Gehäuses (5), auf der Seite gegenüber der ersten Seitenwand (52), eine zweite seitliche Lichtleiterwand ist, die mit mindestens einem zweiten Licht emittierenden Element (44) verbunden ist, wodurch im Gebrauch der Bilderfassungsbereich (40) von zwei gegenüber liegenden Seiten aus durch Licht, das von den Beleuchtungsflächenzonen (521, 531) der seitlichen Lichtleiterwände (52, 53) projiziert wird, beleuchtet wird.

12. Die Bilderfassungsvorrichtung (4) nach jedem der Patentansprüche 1 bis 11, wobei die Innenkammer (50) im Wesentlichen luftdicht im Verhältnis zum Bereich außerhalb des kastenförmigen Gehäuses (5) ist.

13. Die Bilderfassungsvorrichtung (4) nach jedem der Patentansprüche 1 bis 12, wobei die seitlichen Wände (52, 53, 54, 55) des kastenförmigen Gehäuses (5) jeweils eine Seite haben, die zur Innenkammer gerichtet ist, besagte Seite ist schwarz gefärbt oder dunkel gefärbt.

14. Ein Apparat (1) zur Zubereitung eines Getränks, Folgendes beinhaltend:
- eine Infusionskammer (21), die dazu vorgesehen ist, eine Kapsel entgegen zu nehmen, die eine Lebensmittelsubstanz enthält, um ein Getränk zuzubereiten;
- eine Einführöffnung (31), um die Kapsel in den Apparat (1) einzusetzen;
- einen Kapselübertragungskanal (32), der die Einführöffnung (31) mit der Infusionskammer (21) verbindet;
- eine Bilderfassungsvorrichtung (4) nach jedem der Patentansprüche 1 bis 13; wobei der Bilderfassungsbereich (40), zu dem der optische Sensor (42) gerichtet ist, ein Abschnitt des Kapselübertragungskanals (32) ist.

15. Der Apparat (1) nach dem Patentanspruch 14, wobei sich der Übertragungskanal (32) im Wesentlichen von oben nach unten erstreckt und die Bilderfassungsvorrichtung (4) in einem seitlichen Sitz (49) in Bezug auf den Übertragungskanal (32) positioniert ist,
die vordere Wand (51) des kastenförmigen Gehäuses (5) der Bilderfassungsvorrichtung (4) befindet sich dabei in einem Abstand vom Übertragungskanal (32) in einer zurückgesetzten Position im seitlichen Sitz (49), sodass jeglicher Wasserdampf, der während des Gebrauchs aus der Infusionskammer (21) im Übertragungskanal (32) aufsteigt, die vordere Wand (51) nicht berührt.

## Revendications

1. Un dispositif (4) d'acquisition d'images pouvant être utilisé dans un appareil (1) pour la préparation d'une boisson qui utilise une capsule contenant une substance alimentaire,
le dispositif (4) d'acquisition d'images étant destiné, en utilisation, à acquérir au moins une image d'une portion de la capsule,
le dispositif (4) d'acquisition d'images comprenant :
- un capteur optique (42) orienté vers une zone de capture d'images (40) dans laquelle, en utilisation, ladite capsule se trouve ou passe ;
- au moins un élément d'émission de lumière (44) pour, en utilisation, éclairer la zone de capture d'images (40) ;
- une enveloppe en forme de boîtier (5) entourant une chambre intérieure (50) dans laquelle est logé le capteur optique (42), l'enveloppe en forme de boîtier (5) comprenant une paroi avant (51), qui est réalisée en matériau transparent et est interposée entre le capteur optique (42) et la zone de capture d'images (40), et
des parois latérales (52, 53, 54, 55) qui sont raccordées à la paroi avant (51) et délimitent latéralement la chambre intérieure (50) ;
dans lequel au moins une paroi latérale (52) de l'enveloppe en forme de boîtier (5) est accouplée avec ledit au moins un élément d'émission de lumière (44) et a une région de surface éclairante (521) qui est à l'extérieur de la chambre intérieure (5) et fait face à la zone de capture d'images (40), ladite au moins une paroi latérale (52) étant un guide de lumière destiné à transmettre, intérieurement, la lumière émise par l'élément d'émission de lumière (44) vers ladite région de surface éclairante (521),
ce par quoi, en utilisation, la zone de capture d'images (40) est éclairée par la lumière projetée depuis la région de surface éclairante (521) de la paroi latérale de guidage de lumière (52).

2. Le dispositif (4) d'acquisition d'images selon la revendication 1, dans lequel la paroi latérale de guidage de lumière (52) a une première face (523) orientée vers la chambre intérieure (50) et une deuxième face (525) opposée à la première face (523) et orientée vers l'extérieur de la chambre intérieure (50), ladite région de surface éclairante (521) étant sur une face de bord qui raccorde la première face (523) à la deuxième face (525).

3. Le dispositif (4) d'acquisition d'images selon la revendication 2, dans lequel la face de bord est oblique par rapport à la première face (523) et à la deuxième face (525).

4. Le dispositif (4) d'acquisition d'images selon l'une quelconque des revendications de 1 à 3, dans lequel la paroi latérale de guidage de lumière (52) a une partie qui dépasse de la paroi avant (51) du côté vers la zone de capture d'images (40), ladite région de surface éclairante (521) étant sur la partie en saillie de la paroi latérale de guidage de lumière (52).

5. Le dispositif (4) d'acquisition d'images selon la revendication 4, dans lequel la paroi latérale de guidage de lumière (52) a une première face (523) orientée vers la chambre intérieure (50) et une deuxième face (525) opposée à la première face (523) et orientée vers l'extérieur de la chambre intérieure (50),
ladite région de surface éclairante (521) étant une région de la première face (523) qui est à l'extérieur de la chambre intérieure (50) et est située sur ladite partie en saillie de la paroi latérale de guidage de lumière (52).

6. Le dispositif (4) d'acquisition d'images selon la revendication 4 ou 5, dans lequel la partie en saillie de la paroi latérale de guidage de lumière (52) comprend aussi une face oblique (522) qui forme un angle avec la région de surface éclairante (521), dans lequel en utilisation la lumière émise par ledit au moins un élément d'émission de lumière (44) est réfléchie à l'intérieur de la paroi latérale de guidage de lumière (52) par la face oblique face (522) et est dirigée vers la région de surface éclairante (521).

7. Le dispositif (4) d'acquisition d'images selon l'une quelconque des revendications de 1 à 6, dans lequel la paroi latérale de guidage de lumière (52) a un siège pour recevoir ledit au moins un élément d'émission de lumière (44), le siège étant réalisé dans l'épaisseur de la paroi latérale de guidage de lumière (52).

8. Le dispositif (4) d'acquisition d'images selon l'une quelconque des revendications de 1 à 7, dans lequel la paroi latérale de guidage de lumière (52) s'étend d'un premier côté à un deuxième côté le long d'une ligne d'extension qui est essentiellement parallèle à un parcours optique entre le capteur optique (42) et la zone de capture d'images (40), ladite région de surface éclairante (521) étant au niveau du premier côté et ledit au moins un élément d'émission de lumière (44) étant positionné au niveau du deuxième côté.

9. Le dispositif (4) d'acquisition d'images selon l'une quelconque des revendications de 1 à 8, dans lequel ladite région de surface éclairante (521) a une finition de surface translucide ou semi-transparente.

10. Le dispositif (4) d'acquisition d'images selon l'une quelconque des revendications de 1 à 9, dans lequel l'enveloppe en forme de boîtier (5) comprend une paroi arrière (56) qui est du côté opposé à la paroi avant (51), le capteur optique (42) et ledit au moins un élément d'émission de lumière (44) étant montés sur la paroi arrière (56).

11. Le dispositif (4) d'acquisition d'images selon l'une quelconque des revendications de 1 à 10, dans lequel une première paroi latérale (52) de l'enveloppe en forme de boîtier (5) est une première paroi latérale de guidage de lumière accouplée avec au moins un premier élément d'émission de lumière (44) et dans lequel une deuxième paroi latérale (53) de l'enveloppe en forme de boîte (5), du côté opposé à la première paroi latérale (52), est une deuxième paroi latérale de guidage de lumière accouplée avec au moins un deuxième élément d'émission de lumière (44), de sorte que, en utilisation, la zone de capture d'images (40) est éclairée de deux côtés opposés par la lumière projetée depuis les régions de surface éclairantes (521, 531) des parois latérales de guidage de lumière (52, 53).

12. Le dispositif (4) d'acquisition d'images selon l'une quelconque des revendications de 1 à 11, dans lequel la chambre intérieure (50) est essentiellement étanche à l'air par rapport à la région à l'extérieur de l'enveloppe en forme de boîtier (5).

13. Le dispositif (4) d'acquisition d'images selon l'une quelconque des revendications de 1 à 12, dans lequel les parois latérales (52, 53, 54, 55) de l'enveloppe en forme de boîtier (5) ont chacune une face orientée vers la chambre intérieure, ladite face étant de couleur noire ou de couleur foncée.

14. Un appareil (1) pour la préparation d'une boisson, comprenant :
- une chambre d'infusion (21) destinée à recevoir une capsule contenant une substance alimentaire pour préparer une boisson ;
- une ouverture d'introduction (31) pour introduire la capsule dans l'appareil (1) ;
- un canal (32) de transfert de la capsule, qui relie l'ouverture d'introduction (31) à la chambre d'infusion (21) ;
- un dispositif (4) d'acquisition d'images selon l'une quelconque des revendications de 1 à 13 ; dans lequel la zone de capture d'images (40), vers laquelle est orienté le capteur optique (42), est un tronçon du canal (32) de transfert de la capsule.

15. L'appareil (1) selon la revendication 14, dans lequel le canal de transfert (32) s'étend essentiellement de haut en bas et le dispositif (4) d'acquisition d'images est positionné dans un siège latéral (49) par rapport au canal de transfert (32), la paroi avant (51) de l'enveloppe en forme de boîtier (5) du dispositif (4) d'acquisition d'images étant espacée du canal de transfert (32) dans une position rentrée dans le siège latéral (49), de sorte que toute vapeur d'eau qui durant l'utilisation s'élève dans le canal de transfert (32) depuis la chambre d'infusion (21) ne frappe pas la paroi avant (51).
